# EUROPÄISCHE PATENTSCHRIFT

(11) **EP 3 135 943 B1**
(45) Veröffentlichungstag und Bekanntmachung des Hinweises auf die Patenterteilung: **20.06.2018**
(21) Anmeldenummer: 16001652.3
(22) Anmeldetag: 27.07.2016
(51) Int. Cl.: F16D 25/08, F15B 15/14

(54) **HYDRAULIKZYLINDER, INSBESONDERE NEHMERZYLINDER FÜR EINE HYDRAULISCHE KUPPLUNGSBETÄTIGUNG FÜR KRAFTFAHRZEUGE**
HYDRAULIC CYLINDER, IN PARTICULAR SLAVE CYLINDER FOR HYDRAULIC CLUTCH ACTUATION FOR MOTOR VEHICLES
VERIN HYDRAULIQUE, EN PARTICULIER CYLINDRE RECEPTEUR POUR UNE COMMANDE D'EMBRAYAGE HYDRAULIQUE DE VEHICULE AUTOMOBILE

(30) Priorität: 07.08.2015 DE 102015010055
(43) Veröffentlichungstag der Anmeldung: 01.03.2017
(73) Patentinhaber: FTE automotive GmbH, 96106 Ebern (DE)
(72) Erfinder: Ryba, Jürgen, D-96182 Reckendorf (DE)
(74) Vertreter: Oppermann, Mark

(56) Entgegenhaltungen:
- DE-A1-102012 214 124
- DE-A1-102013 221 845
- DE-U1- 20 208 568

## Beschreibung

### TECHNISCHES GEBIET

Die vorliegende Erfindung bezieht sich auf einen Hydraulikzylinder gemäß dem Oberbegriff des Patentanspruchs 1. Insbesondere bezieht sich die Erfindung auf einen Nehmerzylinder für eine hydraulische Kupplungsbetätigung für Kraftfahrzeuge, wie sie massenweise in der Automobilindustrie zum Einsatz kommen.

### STAND DER TECHNIK

Eine herkömmliche hydraulische Kupplungsbetätigung für Kraftfahrzeuge hat einen Geberzylinder, der an einen mit Hydraulikflüssigkeit gefüllten Ausgleichsbehälter angeschlossen ist. Der Geberzylinder weist ein Zylindergehäuse auf, in dessen Gehäusebohrung ein Kolben längsverschieblich aufgenommen ist. Der Geberzylinderkolben begrenzt in der Gehäusebohrung des Zylindergehäuses eine Druckkammer und kann mittels eines Kupplungspedals oder eines elektromotorischen Antriebs mechanisch mit einer Betätigungskraft beaufschlagt werden. Die Druckkammer des Geberzylinders ist über eine Druckleitung mit einer Druckkammer eines Nehmerzylinders hydraulisch verbunden, so dass der durch Niedertreten des Kupplungspedals oder elektromotorische Verschiebung des Geberzylinderkolbens in der Druckkammer des Geberzylinders erzeugte Druck über die Flüssigkeitssäule in der Druckleitung auf die Druckkammer des Nehmerzylinders übertragbar ist. Der Nehmerzylinder weist ebenfalls ein Zylindergehäuse mit einer Gehäusebohrung auf, in der ein die Druckkammer des Nehmerzylinders begrenzender und somit mit dem im Geberzylinder erzeugten Druck beaufschlagbarer Kolben längsverschieblich aufgenommen ist. Dem Nehmerzylinderkolben ist eine Kolbenstange zugeordnet, die an einem Kupplungshebel angreift, welcher seinerseits mit dem Ausrücklager der Kupplung in Wirkverbindung steht. Im Ergebnis kann das Ausrücklager der Kupplung über den Nehmerzylinderkolben mit einer Betätigungskraft beaufschlagt werden, um über einen Ausrückmechanismus die Kupplungsdruckplatte von der Kupplungsmitnehmerscheibe und somit den Motor vom Getriebe des Kraftfahrzeugs zu trennen.

Aus der Druckschrift DE 43 31 241 B4 ist ein Betätigungszylinder, insbesondere Nehmerzylinder für eine hydraulische Kupplungsbetätigung für Kraftfahrzeuge bekannt, der ein Zylindergehäuse aufweist, in dem ein Druckraum ausgebildet ist. Der Druckraum ist auf einer Seite variabel von einem längsverschieblich im Zylindergehäuse aufgenommenen Kolben einer Kolbenbaugruppe begrenzt, die eine starr mit dem Kolben verbundene Kolbenstange aufweist, wodurch der mit der im Stand der Technik weit verbreiteten, gelenkigen Anbindung der Kolbenstange an dem Kolben verbundene Aufwand vermieden wird. Hierbei hat der Kolben eine Außenkontur, die ein geringfügiges Verkippen der Kolbenbaugruppe im Zylindergehäuse gestattet. Ferner weist der Kolben eine sich in axialer Richtung erstreckende, zum Druckraum hin offene umlaufende Nut zur Aufnahme einer ringförmigen Dichtung (Nutring) auf, die auf einem druckraumseitigen Fortsatz des Kolbens mittels eines Halterings (Federteller) zentriert gehalten ist, an dem bei diesem Stand der Technik eine im Druckraum aufgenommene Schraubendruckfeder angreift. Die Dichtung liegt schließlich mit einer umlaufenden Dichtlippe gleitfähig und dichtend an einer innenumfangsseitigen Lauffläche des Zylindergehäuses an.

Bei diesem Stand der Technik soll die sich in axialer Richtung erstreckende, zum Druckraum hin offene umlaufende Nut des Kolbens mit ihrer der Zylinderwandung zugewandten Flanke unter linienförmiger Anlage des Kolbens an der Zylinderwandung dafür sorgen, dass die Dichtung auch bei Verschwenken der Kolbenstange bzw. des Kolbens relativ zum Zylindergehäuse nicht übermäßig verformt wird, so dass eine ausreichende Dichtigkeit des Betätigungszylinders gegeben sein soll.

Dies mag für den eingebauten Zustand des Betätigungszylinders zutreffen, in dem die Kolbenstange mit ihrem vom Kolben abgewandten Ende geführt bzw. an einem Kupplungshebel aufgenommen ist und sich auch der Kolben zumeist in einer Hubstellung befindet, in der die Kolbenstange bei einer Verkippung des Kolbens notfalls am Zylindergehäuse zur Anlage kommen könnte. Problematisch kann es indes werden, wenn der Betätigungszylinder z.B. im Zuge von Reparaturen am Kraftfahrzeug demontiert wird, so dass die Kolbenstange nicht mehr geführt bzw. gehalten ist. Fährt hierbei der Kolben infolge seiner Federbeaufschlagung in eine Hubstellung nahe dem offenen Ende des Zylindergehäuses, in der auch das Zylindergehäuse ein Verschwenken der Kolbenstange nicht hinreichend begrenzen kann, können sich leicht Schwenkwinkel von z.B. gleich oder größer 7° zwischen der Kolbenstange und der Mittelachse des Zylindergehäuses ergeben. Bei solchen, im Verhältnis großen Schwenkwinkeln aber kann sich doch eine derartige elastische Verformung der Dichtung ergeben, dass es zu Undichtigkeiten kommt und der Betätigungszylinder nässt. Dann kann es leicht passieren, dass der Betätigungszylinder irrtümlich als defekt angesehen und ausgetauscht wird, obwohl er im wieder montierten Zustand ohne Weiteres seine Funktion erfüllen würde.

Ein Hydraulikzylinder mit den Merkmalen des Oberbegriffs des Patentanspruchs 1 ist schließlich aus der Druckschrift DE 10 2013 221 845 A1 bekannt.

### AUFGABENSTELLUNG

Der Erfindung liegt dem oben geschilderten Stand der Technik gegenüber die Aufgabe zugrunde, einen möglichst einfach ausgebildeten Hydraulikzylinder, insbesondere Nehmerzylinder für eine hydraulische Kupplungsbetätigung für Kraftfahrzeuge zu schaffen, der stets, insbesondere auch im nicht montierten Zustand eine ausreichende Dichtigkeit aufweist.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 14.

Bei einem Hydraulikzylinder, insbesondere Nehmerzylinder für eine hydraulische Kupplungsbetätigung für Kraftfahrzeuge, der ein Zylindergehäuse hat, in dem ein Druckraum ausgebildet ist, der auf einer Seite variabel von einem längsverschieblich im Zylindergehäuse aufgenommenen Kolben einer Kolbenbaugruppe begrenzt ist, die eine starr mit dem Kolben verbundene Kolbenstange aufweist, wobei der Kolben eine Außenkontur hat, die eine Verkippen der Kolbenbaugruppe im Zylindergehäuse gestattet, und einen druckraumseitigen Fortsatz besitzt, auf dem vermittels eines Halterings ein Dichtelement zentriert gehalten ist, das mit einer umlaufenden Dichtlippe gleitfähig und dichtend an einer innenumfangsseitigen Lauffläche des Zylindergehäuses anliegt; ist der Haltering auf seiner vom Dichtelement abgewandten Seite mit einer Verlängerung versehen, die hinsichtlich ihrer Länge und/oder ihres Durchmessers angepasst ist, bei einem Verkippen der Kolbenbaugruppe im Zylindergehäuse dann an der Lauffläche des Zylindergehäuses zur Anlage zu gelangen, um die Kolbenbaugruppe am Zylindergehäuse abzustützen, wenn ein vorbestimmter Verkippwinkel der Kolbenbaugruppe gegenüber einer Mittelachse des Zylindergehäuses erreicht ist, wobei erfindungsgemäß die Verlängerung des Halterings ausgesteift ist und einen im Wesentlichen hohlzylindrischen Außenabschnitt aufweist, der sich über eine Mehrzahl von gleichmäßig über dem Innenumfang des Außenabschnitts verteilten Aussteifungselementen in radialer Richtung auf dem Fortsatz des Kolbens abstützt.

Im Ergebnis wird - beispielsweise bei Demontage des Hydraulikzylinders in einer Werkstatt - mit einfachen Maßnahmen ein größeres Verkippen der Kolbenbaugruppe relativ zur Mittelachse des Zylindergehäuses, eine damit einhergehende übermäßige Verformung des Dichtelements und in der Folge ein Lecken des Hydraulikzylinders zuverlässig verhindert, welches ansonsten dazu führen könnte, dass der Hydraulikzylinder fälschlicherweise als defekt angesehen und sodann zeitaufwendig und kostenträchtig ausgetauscht wird.

Durch geeignete Wahl der Länge und/oder des Durchmessers der ausgesteiften Verlängerung des Halterings ist es hierbei problemlos möglich, einen maximal zulässigen Verkippwinkel der Kolbenbaugruppe gegenüber der Mittelachse des Zylindergehäuses vorzubestimmen bzw. festzulegen. Diese Begrenzung des Kippwinkels muss natürlich auf einen Winkelwert erfolgen, der im normalen Betrieb des montierten Hydraulikzylinders - bei dem die Kolbenstange der Kolbenbaugruppe z.B. im Falle eines Kupplungsnehmerzylinders nach Maßgabe der Schwenkbewegung des Kupplungshebels und in Abhängigkeit von der Hubstellung des Kolbens im Zylindergehäuse aus einer Mittellage bezüglich des Zylindergehäuses verschwenkt bzw. ausgelenkt wird - nicht erreicht wird. So kann der Winkelwert z.B. auf 5° festgelegt werden, d.h. nach Verkippen der Kolbenstange um 5° relativ zur Mittelachse des Zylindergehäuses des demontierten Hydraulikzylinders kommt die versteifte Verlängerung des Halterings an der Lauffläche des Zylindergehäuses eine weitere Verkippung der Kolbenbaugruppe und eine damit ggf. einhergehende kritische Verformung des Dichtelements verhindernd zur Anlage, und zwar unabhängig von der jeweiligen Hubstellung des Kolbens im Zylindergehäuse.

Mit der Wahl der Abmessungen der ausgesteiften Verlängerung des Halterings kann zudem darauf Einfluss genommen werden, mit welchem Hebelarm um einen virtuellen Verkipp- bzw. Drehpunkt des Kolbens sich die Kolbenbaugruppe über den Haltering an der Lauffläche des Zylindergehäuses abstützt.

Ein weiterer Vorteil der erfindungsgemäßen Ausbildung des Hydraulikzylinders besteht darin, dass ein ohnehin vorhandenes Bauteil, nämlich der Haltering genutzt wird, an/in dem - einer einfachen und kostengünstigen Ausgestaltung mit wenigen Teilen förderlich - als weitere Funktion die Anschlag- bzw. Verkippbe grenzungsfunktion integriert ist. Ein solcher multifunktionale Haltering kann auch sehr kostengünstig in großen Stückzahlen durch Spritzgießen aus Kunststoff ausgebildet werden.

Schließlich zeichnet sich die hohlzylindrische Ausgestaltung des Außenabschnitts insbesondere durch eine einfache Herstellbarkeit, namentlich durch Spritzgießen aus Kunststoff aus. Auf grund der symmetrischen Anordnung bzw. Verteilung der Aussteifungselemente erübrigt sich zudem in vorteilhafter Weise eine richtungsgebundene bzw. drehwinkelorientierte Montage des Halterings am Fortsatz des Kolbens bzw. der gesamten Kolbenbaugruppe im Zylindergehäuse.

Der Erzielung einer sehr hohen Steifigkeit ist es hierbei förderlich, wenn die sich entlang des Außenabschnitts erstreckenden Aussteifungselemente hohlkammerprofilartig ausgebildet sind und jeweils einen im Wesentlichen trapezförmigen Querschnitt aufweisen, wobei sie mit ihrer Schmalseite an dem Fortsatz des Kolbens anliegen.

Prinzipiell kann der Haltering mittels einer Schweiß- oder Klebeverbindung am Fortsatz des Kolbens angebracht sein. Demgegenüber im Hinblick auf eine einfache und kostengünstige, axiale Montage bevorzugt ist es indes, wenn der Haltering mittels einer Schnappverbindung am Fortsatz des Kolbens befestigt ist, die insbesondere leicht in Kunststoff mit ausgebildet werden kann. Vorzugsweise weist der Haltering hierbei eine Mehrzahl von sich in axialer Richtung erstreckenden Federarmen auf, die an ihren freien Enden radial innen jeweils mit einem nasenartigen Vorsprung versehen sind, welcher mit einer am Außenumfang des Fortsatzes ausgebildeten Radialnut eingreift. Zur Befestigung des Halterings am Kolbenfortsatz sind andere Formschlussverbindungen, ggf. in Kombination mit Kräftschluss, wie eine Schraubverbindung, allerdings auch denkbar.

Im Hinblick auf eine kurze Baulänge und eine effiziente Nutzung des vorhandenen Bauraums besonders bevorzugt ist es hierbei, wenn die Federarme des Halterings in Umfangsrichtung gesehen jeweils zwischen benachbarten Aussteifungselementen des Halterings angeordnet sind, so dass sich die Befestigung und die Abstützung des Halterings auf dem Fortsatz des Kolbens in axialer Richtung der Kolbenbaugruppe gesehen auf einer Höhe abspielt.

Im weiteren Verfolg des Erfindungsgedankens kann der Haltering auf seiner dem Kolben zugewandten Seite mit einem ringförmigen Andruckvorsprung versehen sein, der in eine ringförmige Axialnut des Dichtelements eingreift, die auf der vom Kolben abgewandten Seite des Dichtelements die Dichtlippe von einem ringförmigen Befestigungsabschnitt des Dichtelements trennt, der auf dem Fortsatz des Kolbens sitzt. Ein solcher Andruckvorsprung sorgt in einfacher Weise für einen Erhalt der Dichtelementgeometrie auch unter radialer Last auf das Dichtelement und hält zugleich das Dichtelement zuverlässig in seinem Sitz am Kolben.

Vorzugsweise weist der Haltering ferner auf seiner dem Kolben zugewandten Seite eine kreisringförmige, ebene Stirnfläche auf, über die der Haltering in axialer Richtung des Kolbens an einer zugeordneten Ringschulter abstützbar ist, die am Außenumfang des Fortsatzes ausgebildet ist. Durch diese einfache Maßnahme wird ein Montageanschlag geschaffen, der bei einer ggf. automatisierten Montage der Kolbenbaugruppe eine Beschädigung des Dichtelements und der Schnappverbindung (Federarme mit nasenartigen Vorsprüngen, Radialnut) in zuverlässiger Weise verhindert.

Um das kolbenstangenseitige Ende des Hydraulikzylinders in dessen montierten Zustand in Anlage an z.B. einer zugeordneten Aufnahme an einem Kupplungshebel zu halten, kann des Weiteren auf der vom Druckraum abgewandten Seite des Kolbens ein Federelement angeordnet sein, welches sich einerseits an einem am Zylindergehäuse befestigten Federteller abstützt und andererseits mit der Kolbenstange wirkverbunden ist, so dass es die Kolbenbaugruppe in einer von einem Boden des Zylindergehäuses weggewandten Richtung vorgespannt. Im Vergleich zu einer Lösung, bei der das als Schraubendruckfeder ausgebildete Federelement im Druckraum angeordnet ist, wo es sich auf einer Seite am Boden des Zylindergehäuses und auf der anderen Seite über einen Federteller am Kolben abstützt, wie etwa in der eingangs diskutierten Druckschrift DE 43 31 241 B4 gezeigt, ist die vorbeschriebene, bevorzugte Ausgestaltung des Hydraulikzylinders insofern vorteilhaft, als nicht die Gefahr besteht, dass das Federelement die Zylindergehäusewand im Bereich der Dichtungslauffläche berührt und ggf. beschädigt. Außerdem ist hier die Selbstentlüftung besser, sowohl bei der Erstbefüllung als auch im Betrieb des Hydraulikzylinders, weil kein Federelement im Druckraum vorhanden ist, an dem sich Luftblasen festsetzen könnten. Schließlich kann bei dieser Ausgestaltung das Federelement auch zur Geradstellung der Kolbenstange z.B. während der Montage dienen.

Bei einer solchen Ausstattung des Hydraulikzylinders mit einem Federelement kann ferner, um die Kolbenstange bezüglich des Zylindergehäuses z.B. zur Vermeidung einer Überbefüllung einer hydraulischen Kupplungsbetätigung, für den Transport derselben sowie zur Vereinfachung der Montage der Einheit im Kraftfahrzeug temporär zu fesseln, ein Fixierabschnitt vorgesehen sein, der die Kolbenbaugruppe vor einer ersten Betätigung des Hydraulikzylinders in einer vorbestimmten Hubstellung bezüglich des Zylindergehäuses fixiert und dazu ausgebildet ist, mit der ersten Betätigung des Hydraulikzylinders die Kolbenbaugruppe gegenüber dem Zylindergehäuse freizugeben, wobei der Fixierabschnitt vorteilhaft am Federteller vorgesehen ist und zur lösbaren Fixierung der Kolbenbaugruppe bezüglich des Zylindergehäuses mit einem Gegenabschnitt an der Kolbenstange zusammenwirkt.

Es ist hier also kein zusätzliches, einen weiteren Bauraum beanspruchendes Bauteil vorgesehen, um den Fixierabschnitt auszubilden. Vielmehr wird vorteilhaft ein vorhandenes Bauteil, nämlich der Federteller genutzt, an/in dem - einer einfachen und kostengünstigen Ausgestaltung mit wenigen Teilen förderlich - als weitere Funktion eine lösbare Fixierung der Kolbenbaugruppe gegenüber dem Zylindergehäuse integriert ist, wobei sogar der Bauraum mit genutzt wird, der für das Federelement vorgesehen ist. Ein weiterer Vorteil der Anordnung eines solchen Fixierabschnitts am Federteller besteht darin, dass gegenüber anderen vorbekannten Lösungen mit temporärer Fixierung der Kolbenbaugruppe gegenüber dem Zylindergehäuse auf der vom Druckraum abgewandten, Kolbenstangenseite des Kolbens, der Fixierabschnitt mit/nach der Erstbetätigung des Hydraulikzylinders nicht in axialer Richtung des Hydraulikzylinders "wandert", sondern am Federteller in einer in axialer Richtung des Hydraulikzylinders gesehen festen Position verbleibt. Somit ist es z.B. für Reparaturzwecke oder auch nach einem unbeabsichtigten "Auslösen" der temporären Fesselung etwa beim Transport des Hydraulikzylinders grundsätzlich möglich, den Gegenabschnitt an der Kolbenstange am Fixierabschnitt des ortsfesten Federtellers und damit die Kolbenbaugruppe gegenüber dem Zylindergehäuse wieder bzw. erneut zu fesseln.

Grundsätzlich ist es möglich, zum Halten bzw. Zentrieren des Federelements gegenüber dem Zylindergehäuse den Federteller mit z.B. einem Ringvorsprung zu versehen, der am kolbennahen Ende des Federelements stirnseitig in das Federelement eingreift. Im Hinblick auf eine sichere Aufnahme des Federelements bei kurzer Bauweise bevorzugt ist es indes, wenn der Federteller durch ein Ringteil ausgebildet ist, mit einem Innenringabschnitt, durch den sich die Kolbenstange hindurch erstreckt, einem Außenringabschnitt, über den der Federteller am Zylindergehäuse befestigt ist, einem Bodenabschnitt, der den Innenringabschnitt und den Außenringabschnitt verbindet, sowie einer zwischen den vorgenannten Abschnitten begrenzten Ringaussparung zur Aufnahme des kolbennahen Endes des Federelements.

Vorzugsweise weist der Innenringabschnitt hierbei an seinem freien Ende innenumfangsseitig einen den Fixierabschnitt des Federtellers ausbildenden, geringfügig radial auffederbaren Ringwulst auf, während die Kolbenstange einen Kolbenstangenkopf hat, der außenumfangsseitig mit einem den Gegenabschnitt an der Kolbenstange ausbildenden, im Querschnitt gesehen im Wesentlichen balligen Ringbund versehen ist, der sich im fixierten Zustand der Kolbenbaugruppe an dem Ringwulst axial abstützt. Als Alternative hierzu ist prinzipiell zwar auch eine Ausgestaltung denkbar, bei der eine erhabene Struktur - z.B. eine umlaufende (oder mehrere über dem Umfang verteilte) Nase(n) - an dem einen Teil (Federteller oder Kolbenstangenkopf) mit einer Radialnut am jeweils anderen Teil eingreift, um für die temporäre Fesselung der Kolbenbaugruppe gegenüber dem Zylindergehäuse zu sorgen. Demgegenüber bevorzugt ist jedoch die vorbeschriebene, beidseitig erhabene, wulstartige bzw. ballige Ausgestaltung des Fixierabschnitts am Federteller und des Gegenabschnitts an der Kolbenstange, welche Ausgestaltung eine problemlose Überdrückung in zwei entgegengesetzten Richtungen ermöglicht (Lösen oder Fesseln) und somit insbesondere im Hinblick auf eine Wiederherstellung der vorübergehenden Fixierung der Kolbenbaugruppe bezüglich des Zylindergehäuses von Vorteil ist.

Um auf einfache Weise eine definierte Winkelbeweglichkeit der Kolbenstange gegenüber dem Zylindergehäuse zu gewährleisten, kann ferner der Innenringabschnitt des um die Mittelachse drehwinkelorientiert am Zylindergehäuse befestigten Federtellers auf bezüglich der Mittelachse des Zylindergehäuses diametral gegenüberliegenden Seiten mit Aussparungen versehen sein, die im freigegebenen Zustand der Kolbenbaugruppe eine definierte Auslenkung der Kolbenstange gegenüber der Mittelachse des Zylindergehäuses gestatten. In Abhängigkeit vom Wirkdurchmesser des Hydraulikzylinders können die Aussparungen am Innenringabschnitt hierbei in Umfangsrichtung gesehen dessen Ringform unterbrechen (bei kleineren Wirkdurchmessern) oder aber nur radiale Vertiefungen im Innenringabschnitt bilden (bei größeren Wirkdurchmessern) .

Weiterhin kann der Federteller auf der von der Ringaussparung abgewandten Seite des Bodenabschnitts einen ringförmigen Zentriervorsprung aufweisen, um vorteilhaft weitere Funktionen im Federteller zu integrieren. So kann der Zentriervorsprung des Federtellers eine konisch abgeschrägte Innenumfangsfläche besitzen, gegen die eine komplementär geformte Gegenfläche am Außenumfang des Kolbens bei freigegebener Kolbenbaugruppe in Anlage bringbar ist, um die starr mit dem Kolben verbundene Kolbenstange mit der Mittelachse des Zylindergehäuses im Wesentlichen auszufluchten. Diese Ausgestaltung vereinfacht zum einen bei der Erstmontage der Kolbenbaugruppe das Fügen des Federtellers zum Zylindergehäuse, wobei das an der Kolbenbaugruppe vormontierte Federelement den Federteller gegen den Kolben spannt und dabei den Federteller infolge der Anlage der konisch abgeschrägten Innenumfangsfläche des Zentriervorsprungs an der komplementär geformten Gegenfläche am Außenumfang des Kolbens bezüglich der Kolbenstange senkrecht stellt bzw. hält.

Zum anderen ist es so im zusammengebauten Zustand des Hydraulikzylinders möglich, den Kolben mittels des Federelements gegen den am Zylindergehäuse befestigten Federteller zu spannen, um die Kolbenstange aufgrund der Anlage der konisch abgeschrägten Gegenfläche am Außenumfang des Kolbens an der komplementär geformten Innenumfangsfläche des Zentriervorsprungs des Federtellers bezüglich des Zylindergehäuses gerade zu stellen bzw. zu halten, was z.B. im Falle eines Austauschs des Hydraulikzylinders dessen Montage vereinfacht.

Wenngleich der Kolben grundsätzlich einstückig mit der Kolbenstange aus Kunststoff spritzgegossen sein kann, ist es im vorliegenden Fall aus Festigkeitsgründen bei kompakten Abmessungen schließlich bevorzugt, wenn der Kolben aus Kunststoff auf die Kolbenstange aufgespritzt ist, um den Kolben mit der Kolbenstange starr zu verbinden.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen Zeichnungen näher erläutert, in denen elastomere Teile zur Vereinfachung der Darstellung im unverformten Zustand gezeigt sind. In den Zeichnungen zeigen:

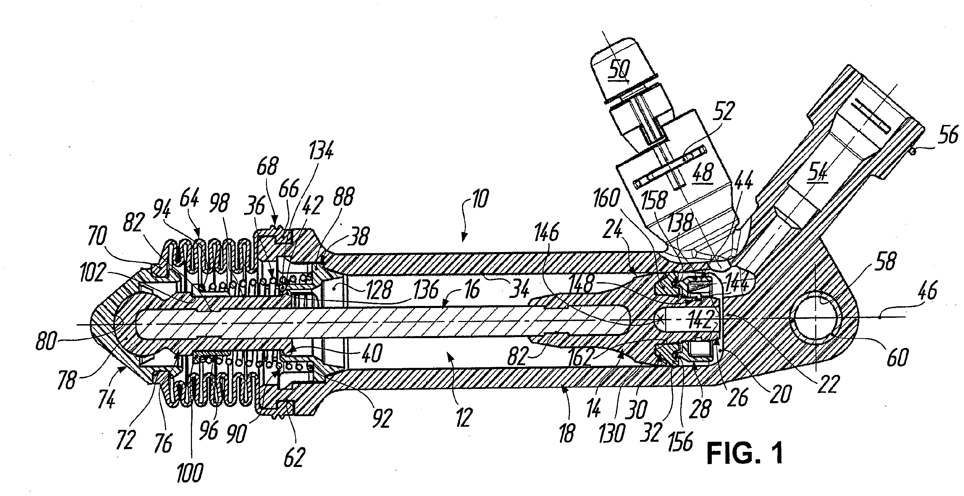

- Fig. 1: eine entlang einer Mittelachse bis auf einen Entlüfteranschluss aufgebrochene Seitenansicht eines erfindungsgemäß ausgebildeten Nehmerzylinders für eine hydraulische Kupplungsbetätigung für Kraftfahrzeuge im uneingebauten Zustand, dessen in einem Zylindergehäuse längsverschieblich aufgenommene Kolbenbaugruppe in einer vorbestimmten Hubstellung bezüglich des Zylindergehäuses dargestellt ist, in der die Kolbenbaugruppe gegen die Kraft eines sich über einen Federteller am Zylindergehäuse abstützenden Federelements mittels eines am Federteller vorgesehenen Fixierabschnitts lösbar gehalten ist, der hierzu mit einem Gegenabschnitt an einer Kolbenstange der Kolbenbaugruppe zusammenwirkt;
- Fig. 2: eine gegenüber dem Maßstab von Fig. 1 vergrößerte, nach rechts abgebrochene, ansonsten aber der Fig. 1 entsprechende Darstellung des in Fig. 1 linken Endes des Nehmerzylinders gemäß Fig. 1, zur Veranschaulichung weiterer Details zu den Maßnahmen für die temporäre Fesselung der Kolbenbaugruppe gegenüber dem Zylindergehäuse;
- Fig. 3: eine perspektivische Darstellung der vom Zylindergehäuse getrennten Kolbenbaugruppe des Nehmerzylinders gemäß Fig. 1, mit einem an einem Kolbenstangenkopf montierten, geschlitzten Gegenhalterring für das Federelement;
- Fig. 4: eine gegenüber dem Maßstab von Fig. 1 vergrößerte, perspektivische Darstellung des vom Zylindergehäuse getrennten Federtellers des Nehmerzylinders gemäß Fig. 1 von schräg vorne;
- Fig. 5: eine Vorderansicht des Federtellers gemäß Fig. 4 im Maßstab von Fig. 4;
- Fig. 6: eine Längsschnittansicht des Federtellers gemäß Fig. 4 entsprechend der Schnittverlaufslinie VI-VI in Fig. 5;
- Fig. 7: eine Längsschnittansicht des Federtellers gemäß Fig. 4 entsprechend der Schnittverlaufslinie VII-VII in Fig. 5;
- Fig. 8: eine nach rechts abgebrochene, perspektivische Darstellung eines offenen Endes des Zylindergehäuses des Nehmerzylinders gemäß Fig. 1 von schräg vorne und im Maßstab der Fig. 4, ohne am Zylindergehäuse montierten Federteller;
- Fig. 9: eine nach rechts abgebrochene Längsschnittansicht des Zylindergehäuses von Fig. 8 im Bereich des offenen Endes, ohne am Zylindergehäuse montierten Federteller;
- Fig. 10: eine nach rechts abgebrochene, im Blickwinkel und im Maßstab der Fig. 8 entsprechende, perspektivische Darstellung des offenen Endes des Zylindergehäuses des Nehmerzylinders gemäß Fig. 1, mit dem am Zylindergehäuse montierten Federteller gemäß Fig. 4;
- Fig. 11: eine nach links abgebrochene Längsschnittansicht eines an der Kolbenstange angebrachten Kolbens der Kolbenbaugruppe des Nehmerzylinders gemäß Fig. 1 im Maßstab der Fig. 2, ohne Dichtelement und Haltering hierfür;
- Fig. 12: eine gegenüber dem Maßstab von Fig. 1 vergrößerte, perspektivische Darstellung des vom Kolben des Nehmerzylinders gemäß Fig. 1 getrennten Halterings für das Dichtelement von schräg vorne;
- Fig. 13: eine Rückansicht des Halterings gemäß Fig. 12 im Maßstab von Fig. 12;
- Fig. 14: eine Längsschnittansicht des Halterings gemäß Fig. 12 entsprechend der Schnittverlaufslinie XIV-XIV in Fig. 13; und
- Fig. 15: eine Längsschnittansicht des Halterings gemäß Fig. 12 entsprechend der Schnittverlaufslinie XV-XV in Fig. 13.

### DETAILLIERTE BESCHREIBUNG DES AUSFÜHRUNGSBEISPIELS

Gemäß Fig. 1 hat ein Nehmerzylinder 10 für eine hydraulische Kupplungsbetätigung für Kraftfahrzeuge eine Kolbenbaugruppe 12, die einen Kolben 14 und eine starr damit verbundene Kolbenstange 16 umfasst, sowie ein Zylindergehäuse 18, in dem ein Druckraum 20 ausgebildet ist, der auf der einen Seite (links in Fig. 1) variabel von dem längsverschieblich im Zylindergehäuse 18 aufgenommenen Kolben 14 und auf der anderen Seite (rechts in Fig. 1) fest von einem Boden 22 des Zylindergehäuses 18 begrenzt ist. Der im dargestellten Ausführungsbeispiel aus Kunststoff auf die Kolbenstange 16 aufgespritzte Kolben 14 hat hierbei eine Außenkontur 24, die ein Verkippen der Kolbenbaugruppe 12 im Zylindergehäuse 18 gestattet. Ferner besitzt der Kolben 14 einen druckraumseitigen Fortsatz 26, auf dem vermittels eines Halterings 28 ein Dichtelement 30 zentriert gehalten ist, das mit einer umlaufenden Dichtlippe 32 gleitfähig und dichtend an einer innenumfangsseitigen Lauffläche 34 des Zylindergehäuses 18 anliegt.

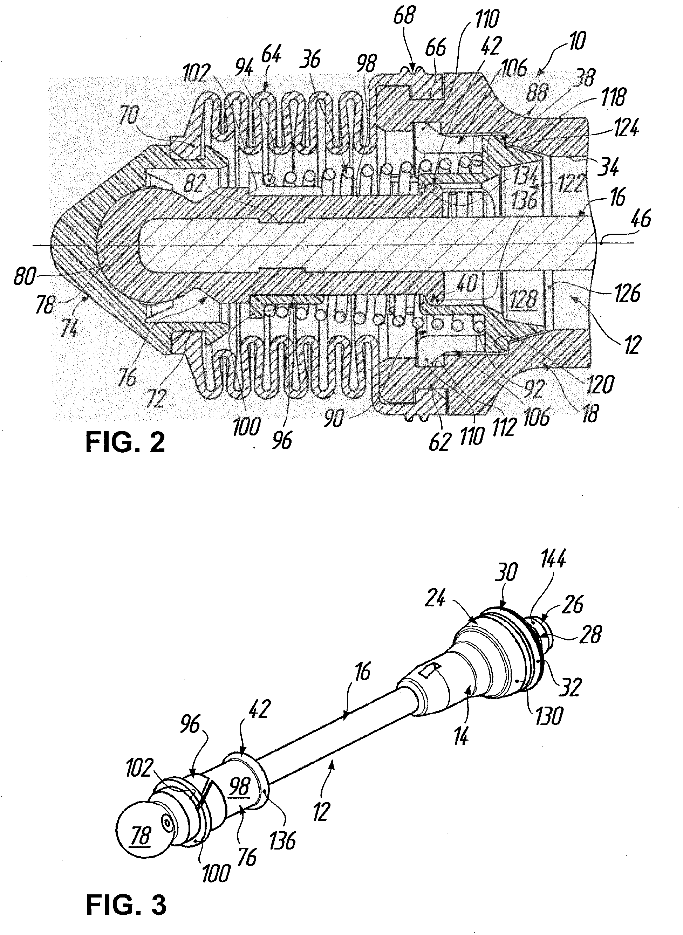

Auf der vom Druckraum 20 abgewandten Seite des Kolbens 14 ist ein Federelement 36 angeordnet, das sich einerseits an einem gehäuseseitigen Federteller 38 abstützt und andererseits mit der Kolbenstange 16 wirkverbunden ist, um die Kolbenbaugruppe 12 in einer vom Boden 22 des Zylindergehäuses 18 weggewandten Richtung vorzuspannen. Bei dem Federteller 38 handelt es sich ersichtlich um ein vom Zylindergehäuse 18 separates Teil. Des Weiteren ist ein Fixierabschnitt 40 vorgesehen, der die Kolbenbaugruppe 12 vor einer ersten Betätigung des Nehmerzylinders 10 in einer vorbestimmten Hubstellung bezüglich des Zylindergehäuses 18 fixiert, wie in den Fig. 1 und 2 gezeigt, und dazu ausgebildet ist, mit der ersten Betätigung des Nehmerzylinders 10 die Kolbenbaugruppe 12 gegenüber dem Zylindergehäuse 18 freizugeben, so dass die Kolbenstange 16 des Nehmerzylinders 10 bezüglich des Zylindergehäuses 18 des Nehmerzylinders 10 zur Vermeidung einer Überbefüllung der hydraulischen Kupplungsbetätigung, für den Transport des Nehmerzylinders 10 sowie zur Vereinfachung der Montage der Einheit im Kraftfahrzeug temporär gefesselt werden kann.

Wie nachfolgend unter Bezugnahme auf insbesondere die Fig. 2, 4 bis 7 und 10 noch näher beschrieben werden wird, ist der Fixierabschnitt 40 am Federteller 38 ausgebildet und wirkt zur lösbaren Fixierung der Kolbenbaugruppe 12 bezüglich des Zylindergehäuses 18 mit einem Gegenabschnitt 42 an der Kolbenstange 16 zusammen.

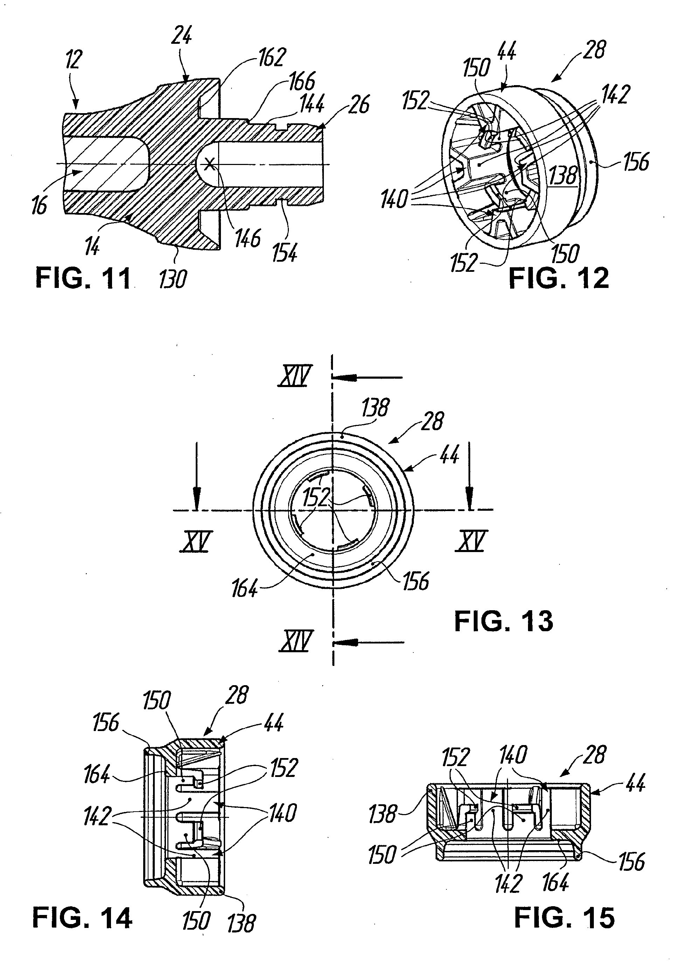

Darüber hinaus ist, wie im Folgenden insbesondere anhand der Fig. 11 bis 15 ebenfalls noch im Detail erläutert werden wird, der Haltering 28 auf seiner vom Dichtelement 30 abgewandten Seite mit einer ausgesteiften Verlängerung 44 versehen, die hinsichtlich ihrer Länge und/oder ihres Durchmessers angepasst ist, bei einem Verkippen der Kolbenbaugruppe 12 im Zylindergehäuse 18 dann an der Lauffläche 34 des Zylindergehäuses 18 zur Anlage zu gelangen, um die Kolbenbaugruppe 12 am Zylindergehäuse 18 abzustützen, wenn ein vorbestimmter Verkippwinkel der Kolbenbaugruppe 12 gegenüber der Mittelachse 46 des Zylindergehäuses 18, z.B. 5° erreicht ist, damit Undichtigkeiten zwischen der Dichtlippe 32 des Dichtelements 30 und der Lauffläche 34 im Zylindergehäuse 18 zuverlässig vermieden werden.

Gemäß Fig. 1 ist das im dargestellten Ausführungsbeispiel aus Kunststoff spritzgegossene Zylindergehäuse 18 des Nehmerzylinders 10 im Bereich des Bodens 22 mit zwei einstückig angeformten Anschlüssen versehen, die in dem Druckraum 20 an dessen in Fig. 1 rechten Ende münden. Bei diesen Anschlüssen handelt es sich zum einen um einen Entlüfteranschluss 48, in dem ein an sich bekannter Entlüfter 50 abgedichtet aufgenommen und mittels eines Sicherungselements 52 befestigt ist, und zum anderen um einen Druckanschluss 54, in den eine Druckleitung (nicht gezeigt) hydraulisch dicht mit einem Steckerteil einsteckbar und mittels eines weiteren Sicherungselements 56 festlegbar ist, um den Nehmerzylinder 10 in an sich bekannter Weise hydraulisch mit einem Kupplungsgeberzylinder (nicht dargestellt) zu verbinden. Zur Befestigung des Nehmerzylinders 10 an etwa einer Getriebewand (nicht gezeigt) weist das Zylindergehäuse 18 nahe dem Boden 22 ferner eine Befestigungsbohrung 58 auf, die mit einer geschlitzten Stahlbuchse 60 ausgekleidet bzw. verstärkt ist, durch die sich im montierten Zustand des Nehmerzylinders 10 z.B. eine Schraube (nicht dargestellt) als Befestigungsmittel hindurch erstreckt.

Am in Fig. 1 linken, offenen Ende des Zylindergehäuses 18 ist Letzteres außenumfangsseitig mit einer Radialnut 62 versehen, in die ein das Federelement 36 schützend umgebender, elastomerer Faltenbalg 64 mit einem innenumfangsseitigen Ringbund 66 eingeknüpft ist. Nicht gezeigte Befestigungsmittel halten den Ringbund 66 bei 68 (Angriffstelle für Befestigungsmittel) von radial außen in dieser Position. An seinem vom Zylindergehäuse 18 abgewandten Ende ist der Faltenbalg 64 mit einem weiteren innenumfangsseitigen Ringbund 70 versehen, der in eine Radialnut 72 eingeknüpft ist, die an einer Staubschutzkappe 74 ausgebildet ist. Die Staubschutzkappe 74, über welche die Kolbenstange 16 im im Kraftfahrzeug montierten Zustand des Nehmerzylinders 10 betätigungswirksam an einem Kupplungshebel (nicht gezeigt) angreift, ist in an sich bekannter Weise gegenüber der Kolbenstange 16 verschwenkbar an der Kolbenstange 16 angelenkt. Genauer gesagt hat die Kolbenstange 16 einen Kolbenstangenkopf 76 mit einem Kugelende 78, das formschlüssig in einen inneren Kugelkalottenabschnitt 80 der Staubschutzkappe 74 eingreift.

Wie der Kolben 14 ist im dargestellten Ausführungsbeispiel auch der Kolbenstangenkopf 76 aus Kunststoff auf die metallische Kolbenstange 16 aufgespritzt. An den Enden der stabförmigen Kolbenstange 16 ausgebildete Profilierungen - hier in der Form von Radialnuten 82, in die der Kunststoff eindringen kann - sorgen dabei für eine zug- und druckfeste Festlegung des Kolbenstangenkopfs 76 bzw. des Kolbens 14 an der Kolbenstange 16.

Innenumfangsseitig ist das Zylindergehäuse 18 an seinem offenen Ende vor der Lauffläche 34 insbesondere zur Aufnahme des Federtellers 38 mit zur Lauffläche 34 hin abnehmendem Durchmesser mehrfach gestuft und abgeschrägt, wie am besten in den Fig. 2, 8 und 9 zu sehen ist. Diese Stufen und Abschrägungen am Innenumfang des Zylindergehäuses 18 wirken mit komplementären Geometrien am Federteller 38 zusammen, wie nachfolgend noch näher beschrieben werden wird.

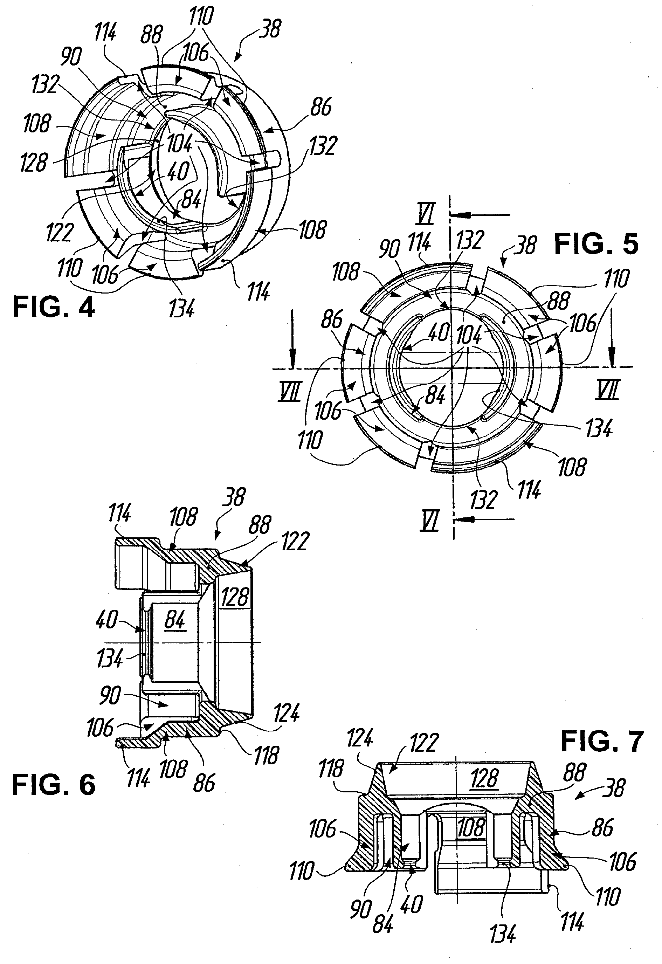

Weitere Einzelheiten des durch ein vom Zylindergehäuse 18 gesondertes Ringteil ausgebildeten Federtellers 38 sind insbesondere den Fig. 4 bis 7 und 10 zu entnehmen. Demgemäß umfasst der Federteller 38 allgemein einen Innenringabschnitt 84, durch den sich die Kolbenstange 16 hindurch erstreckt (siehe die Fig. 1 und 2), einen Außenringabschnitt 86, über den der Federteller 38 auf noch zu beschreibende Weise am Zylindergehäuse 18 befestigt ist, und einen Bodenabschnitt 88, der den Innenringabschnitt 84 und den Außenringabschnitt 86 verbindet. Hierbei begrenzen die vorgenannten Abschnitte 84, 86, 88 des Federtellers 38 eine Ringaussparung 90, die, wie die Fig. 1 und 2 zeigen, der Aufnahme eines kolbennahen, durchmessergrößten Endes 92 des Federelements 36 dienen, welches als im Wesentlichen konisch geformte Schraubendruckfeder ausgebildet ist.

Demnach stützt sich das Federelement 36 mit seinem in den Fig. 1 und 2 rechten, kolbennahen Ende 92 am Bodenabschnitt 88 des Federtellers 38 ab. Das in den Fig. 1 und 2 linke, durchmesserkleinste und kolbenferne Ende 94 des Federelements 36 hingegen greift am Kolbenstangenkopf 76 über einen geschlitzten Gegenhalterring 96 an. Der Gegenhalterring 96 ist auf eine zugeordnete Trägerfläche 98 am Kolbenstangenkopf 76 aufgeschnappt und weist endseitig einen radial nach außen vorstehenden Ringbund 100 auf, an dessen dem Kolben 14 zugewandter Seite das kolbenferne Ende 94 des Federelements 36 anliegt. Auf seiner vom Kolben 14 abgewandten Seite hingegen stützt sich der Ringbund 100 an einer am Kolbenstangenkopf 76 ausgebildeten Ringschulter 102 axial ab. Es ist ersichtlich, dass das sich über den Federteller 38 am Zylindergehäuse 18 abstützende Federelement 36 somit über den Kolbenstangenkopf 76 eine Kraft auf die Kolbenbaugruppe 12 ausübt, die in den Fig. 1 und 2 nach links wirkt und bestrebt ist, die Staubschutzkappe 74 nach links zu drücken und über die Kolbenstange 16 den Kolben 14 vom Boden 22 des Zylindergehäuses 18 wegzuziehen.

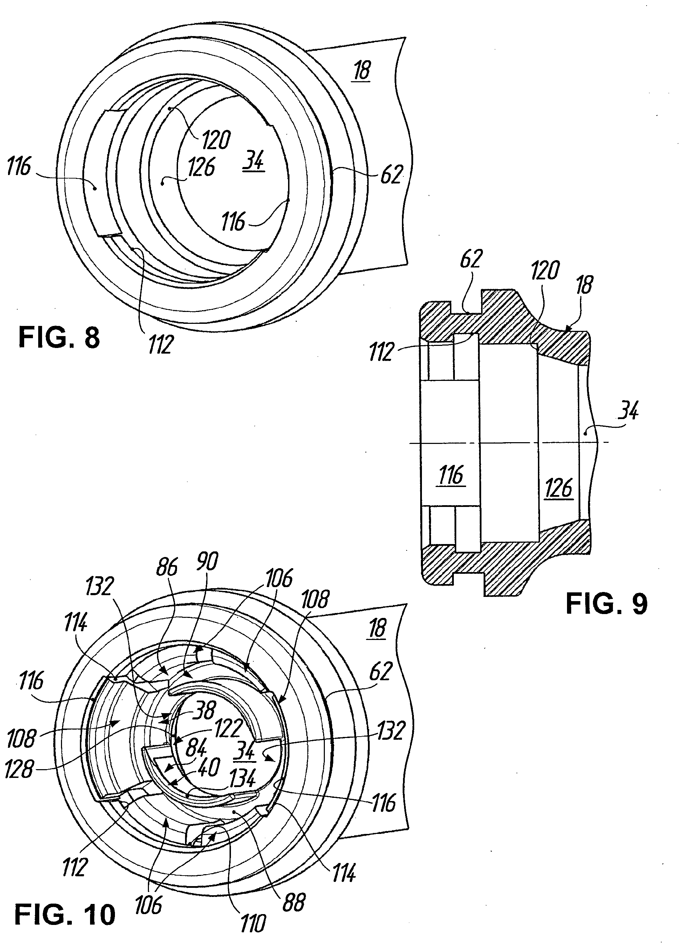

Gemäß insbesondere den Fig. 4 und 5 ist der Außenringabschnitt 86 des Federtellers 38 ausgehend von seinem freien Ende mit einer Mehrzahl von über dem Umfang verteilten, in Richtung des Bodenabschnitts 88 verlaufenden axialen Schlitzen 104 versehen. Die Schlitze 104 unterteilen den Außenringabschnitt 86 in verschiedene Segmente 106, 108, welche der Festlegung des Federtellers 38 am Zylindergehäuse 18 dienen. Hierbei bilden die Segmente 106 im dargestellten Ausführungsbeispiel vier Federarme, die gemäß insbesondere Fig. 7 an ihren freien Enden radial außen jeweils mit einem nasenartigen Vorsprung 110 versehen sind, welcher mit einer am Innenumfang des Zylindergehäuses 18 ausgebildeten Radialnut 112 eingreift, um den Federteller 38 in der Art einer Schnappverbindung am Zylindergehäuse 18 in axialer Richtung zu sichern. Die im dargestellten Ausführungsbeispiel zwei anderen, einander diametral gegenüberliegenden Segmente 108 des Außenringabschnitts 86 des Federtellers 38 hingegen weisen gemäß insbesondere den Fig. 4, 6, 7 und 10 an ihren freien Enden jeweils einen radial nach außen und axial vorstehenden, teilzylindrischen Endabschnitt 114 auf, der mit jeweils einer komplementären Aussparung 116 am Innenumfang des Zylindergehäuses 18 (siehe insbesondere die Fig. 8 und 10) formschlüssig eingreift, um den Federteller 38 gegen ein Verdrehen im Zylindergehäuse 18 zu sichern.

Wie ferner insbesondere den Fig. 2, 6 und 7 zu entnehmen ist, weist der Bodenabschnitt 88 des Federtellers 38 auf seiner von der Ringaussparung 90 abgewandten Seite eine kreisringförmige, ebene Stirnfläche 118 auf, mit der sich der Federteller 38 in axialer Richtung des Zylindergehäuses 18 an einer zugeordneten Ringschulter 120 abstützt, die am Innenumfang des Zylindergehäuses 18 ausgebildet ist. Radial innerhalb der kreisringförmigen Stirnfläche 118 ist am Federteller 38 auf der von der Ringaussparung 90 abgewandten Seite des Bodenabschnitts des Weiteren ein ringförmiger Zentriervorsprung 122 ausgebildet, wie wiederum am besten in den Fig. 2, 6 und 7 zu sehen ist. Der Zentriervorsprung 122 besitzt eine konisch abgeschrägte Außenumfangsfläche 124, die gemäß Fig. 2 einer komplementär geformten Gegenfläche 126 am Innenumfang des Zylindergehäuses 18 gegenüberliegt. Weiterhin weist der Zentriervorsprung 122 eine konisch abgeschrägte Innenumfangsfläche 128 auf, gegen die eine komplementär geformte Gegenfläche 130 am Außenumfang des Kolbens 14 (siehe die Fig. 1 und 3) bei von dem Fixierabschnitt 40 freigegebener Kolbenbaugruppe 12 in Anlage gebracht werden kann, um die Kolbenstange 16 mit der Mittelachse 46 des Zylindergehäuses 18 im Wesentlichen auszufluchten.

Wie weiterhin insbesondere die Fig. 4, 5 und 10 zeigen ist der Innenringabschnitt 84 des Federtellers 38 auf bezüglich der Mittelachse 46 des Zylindergehäuses 18 diametral gegenüberliegenden Seiten mit insgesamt zwei Aussparungen 132 versehen, die im dargestellten Ausführungsbeispiel den Innenringabschnitt 84 unterbrechen und in axialer Richtung bis zum Bodenabschnitt 88 des Federtellers 38 reichen. Die Aussparungen 132 gestatten im vom Fixierabschnitt 40 freigegebenen Zustand der Kolbenbaugruppe 12 eine definierte Auslenkung der Kolbenstange 16 gegenüber der Mittelachse 46 des Zylindergehäuses 18, nämlich dann, wenn die Kolbenstange 16 von einer bezüglich des Zylindergehäuses 18 im Wesentlichen mittigen Position in Richtung einer Aussparung 132 verschwenkt wird. Ansonsten begrenzt der Innenringabschnitt 84 des Federtellers 38 in Abhängigkeit von der Hubstellung des Kolbens 14 im Zylindergehäuse 18 die Auslenkung der Kolbenstange 16, wobei indes der Haltering 28 am Kolben 14 dafür sorgt, dass ein vorbestimmter Verkippwinkel der Kolbenbaugruppe 12 gegenüber der Mittelachse 46 des Zylindergehäuses 18 nie überschritten wird, wie weiter oben bereits erwähnt.

Schließlich weist der Innenringabschnitt 84 des Federtellers 38 an seinem freien Ende innenumfangsseitig einen den Fixierabschnitt 40 des Federtellers 38 ausbildenden, geringfügig radial auffederbaren Ringwulst 134 auf, der im hier dargestellten Ausführungsbeispiel von den Aussparungen 132 unterbrochen ist. Darüber hinaus ist der Kolbenstangenkopf 76 an seinem dem Kolben 14 zugewandten Ende außenumfangsseitig mit einem den vorerwähnten Gegenabschnitt 42 an der Kolbenstange 16 ausbildenden, im Querschnitt gesehen (vgl. Fig. 2) im Wesentlichen balligen Ringbund 136 versehen, der sich im fixierten Zustand der federvorgespannten Kolbenbaugruppe 12 an dem Ringwulst 134 des Federtellers 38 axial abstützt, um die Kolbenbaugruppe 12 im Zylindergehäuse 18 in der in den Fig. 1 und 2 gezeigten Stellung temporär zu fesseln.

Weitere Details zum Haltering 28 und zu dessen Befestigung am Fortsatz 26 des Kolbens 14 sind den Fig. 11 bis 15 zu entnehmen. Gemäß den Fig. 12, 14 und 15 weist die Verlängerung 44 des Halterings 28 einen im Wesentlichen hohlzylindrischen Außenabschnitt 138 auf, der sich über eine Mehrzahl von, im dargestellten Ausführungsbeispiel vier gleichmäßig über dem Innenumfang des Außenabschnitts 138 verteilten Aussteifungselementen 140 in radialer Richtung auf dem Fortsatz 26 des Kolbens 14 abstützt. Wie in Fig. 12 zu erkennen ist erstrecken sich die Aussteifungselemente 140 in axialer Richtung entlang des Außenabschnitts 138 und sind hohlkammerprofilartig mit jeweils einem im Wesentlichen trapezförmigen Querschnitt ausgebildet. Im montierten Zustand des Halterings 28 (siehe Fig. 1) liegen die Aussteifungselemente 140 jeweils mit ihrer radial inneren Schmalseite 142 an dem Fortsatz 26 des Kolbens 14, genauer dessen Außenumfangsfläche 144 an.

Erfolgt etwa im Zuge einer Demontage des Nehmerzylinders 10 von seinem Einbauort eine stärkere Auslenkung der Kolbenstange 16 und damit der gesamten Kolbenbaugruppe 12 relativ zur Mittelachse 46 des Zylindergehäuses 18, bei der der Kolben 14 um einen virtuellen Drehpunkt 146 etwa auf axialer Höhe des Dichtelements 30 verkippt, so stützt sich der Kolben 14 über die Außenumfangsfläche 144 seines Fortsatzes 26, die entsprechende(n) Schmalseite(n) 142 des Aussteifungselements 140 bzw. der Aussteifungselemente 140 des Halterings 28 und dessen Außenabschnitt 138, genauer dem vom Kolben 14 abgewandten, radial äußeren Ende des Außenabschnitts 138 an der Lauffläche 34 des Zylindergehäuses 18 ab, und zwar mit einem axialen Abstand zum virtuellen Drehpunkt 146 des Kolbens 14 und somit einem gewissen Hebelarm. Im Ergebnis wird eine übermäßige Verformung der gegen die Lauffläche 34 des Zylindergehäuses 18 drückenden Dichtlippe 32 des Dichtelements 30 und damit eine Leckage von Hydraulikfluid aus dem Druckraum 20 zuverlässig verhindert.

Wie des Weiteren der Fig. 1 zu entnehmen ist, ist der Haltering 28 mittels einer Schnappverbindung 148 am Fortsatz 26 des Kolbens 14 befestigt. Hierfür weist der Haltering 28 gemäß den Fig. 12 bis 15 eine Mehrzahl von, im dargestellten Ausführungsbeispiel insgesamt vier sich in axialer Richtung erstreckenden Federarmen 150 auf, die an ihren freien Enden radial innen jeweils mit einem nasenartigen Vorsprung 152 versehen sind, welcher mit einer am Außenumfang (Außenumfangsfläche 144) des Fortsatzes 26 ausgebildeten Radialnut 154 (siehe Fig. 11) eingreift. Wie am besten in Fig. 12 zu erkennen ist sind die Federarme 150 des Halterings 28 in Umfangsrichtung gesehen jeweils zwischen benachbarten Aussteifungselementen 140 des Halterings 28 angeordnet, so dass sich die Aussteifungselemente 140 und die Federarme 150 des Halterings 28 in axialer Richtung der Kolbenbaugruppe 12 gesehen etwa auf einer Höhe befinden.

Auf seiner dem Kolben 14 zugewandten Seite ist der Haltering 28 ferner mit einem ringförmigen Andruckvorsprung 156 versehen, der in eine ringförmige Axialnut 158 des Dichtelements 30 eingreift. Die Axialnut 158 trennt auf der vom Kolben 14 abgewandten Seite des Dichtelements 30 die Dichtlippe 32 von einem ringförmigen Befestigungsabschnitt 160 des Dichtelements 30, der auf dem Fortsatz 26 des Kolbens 14 in einer ringförmigen, zum Druckraum 20 hin offenen Axialnut 162 des Kolbens 14 sitzt.

Schließlich weist der Haltering 28 auf seiner dem Kolben 14 zugewandten Seite radial innerhalb des Andruckvorsprungs 156 noch eine kreisringförmige, ebene Stirnfläche 164 auf, über die der Haltering 28 in axialer Richtung des Kolbens 14 an einer zugeordneten Ringschulter 166 abstützbar ist, die gemäß Fig. 11 am Außenumfang des Fortsatzes 26 des Kolbens 14 ausgebildet ist, so dass ein Montageanschlag vorhanden ist, der eine Beschädigung des Dichtelements 30 und/oder der Schnapparme des Halterings 28 (Federarme 150 mit nasenartigen Vorsprüngen 152) bei der ggf. automatisierten Montage dieser Bauteile zuverlässig verhindert.

Ein Hydraulikzylinder hat ein Zylindergehäuse, in dem ein Druckraum ausgebildet ist, der auf einer Seite variabel von einem längsverschieblich im Zylindergehäuse aufgenommenen Kolben einer Kolbenbaugruppe begrenzt ist, die eine starr mit dem Kolben verbundene Kolbenstange aufweist, wobei der Kolben eine Außenkontur hat, die ein Verkippen der Kolbenbaugruppe im Zylindergehäuse gestattet, und einen druckraumseitigen Fortsatz besitzt, auf dem vermittels eines Halterings ein Dichtelement zentriert gehalten ist, das mit einer umlaufenden Dichtlippe gleitfähig und dichtend an einer Lauffläche des Zylindergehäuses anliegt. Der Haltering ist auf seiner vom Dichtelement abgewandten Seite mit einer ausgesteiften Verlängerung versehen, die in Länge und/oder Durchmesser angepasst ist, bei einem Verkippen der Kolbenbaugruppe im Zylindergehäuse jedenfalls dann an der Lauffläche zur Anlage zu gelangen, um die Kolbenbaugruppe am Zylindergehäuse abzustützen, wenn ein vorbestimmter Verkippwinkel der Kolbenbaugruppe gegenüber einer Mittelachse des Zylindergehäuses erreicht ist.

### BEZUGSZEICHENLISTE

- 10: Hydraulikzylinder / Nehmerzylinder
- 12: Kolbenbaugruppe
- 14: Kolben
- 16: Kolbenstange
- 18: Zylindergehäuse
- 20: Druckraum
- 22: Boden
- 24: Außenkontur
- 26: Fortsatz
- 28: Haltering
- 30: Dichtelement
- 32: Dichtlippe
- 34: Lauffläche
- 36: Federelement
- 38: Federteller
- 40: Fixierabschnitt
- 42: Gegenabschnitt
- 44: Verlängerung
- 46: Mittelachse
- 48: Entlüfteranschluss
- 50: Entlüfter
- 52: Sicherungselement
- 54: Druckanschluss
- 56: Sicherungselement
- 58: Befestigungsbohrung
- 60: Stahlbuchse
- 62: Radialnut
- 64: Faltenbalg
- 66: Ringbund
- 68: Angriffstelle für Befestigungsmittel
- 70: Ringbund
- 72: Radialnut
- 74: Staubschutzkappe
- 76: Kolbenstangenkopf
- 78: Kugelende
- 80: Kugelkalottenabschnitt
- 82: Radialnut
- 84: Innenringabschnitt
- 86: Außenringabschnitt
- 88: Bodenabschnitt
- 90: Ringaussparung
- 92: kolbennahes Ende
- 94: kolbenfernes Ende
- 96: Gegenhalterring
- 98: Trägerfläche
- 100: Ringbund
- 102: Ringschulter
- 104: Schlitz
- 106: Segment
- 108: Segment
- 110: nasenartiger Vorsprung
- 112: Radialnut
- 114: Endabschnitt
- 116: Aussparung
- 118: Stirnfläche
- 120: Ringschulter
- 122: Zentriervorsprung
- 124: Außenumfangsfläche
- 126: Gegenfläche
- 128: Innenumfangsfläche
- 130: Gegenfläche
- 132: Aussparung
- 134: Ringwulst
- 136: Ringbund
- 138: Außenabschnitt
- 140: Aussteifungselement
- 142: Schmalseite
- 144: Außenumfangsfläche
- 146: virtueller Drehpunkt
- 148: Schnappverbindung
- 150: Federarm
- 152: nasenartiger Vorsprung
- 154: Radialnut
- 156: Andruckvorsprung
- 158: Axialnut
- 160: Befestigungsabschnitt
- 162: Axialnut
- 164: Stirnfläche
- 166: Ringschulter

## Patentansprüche

1. Hydraulikzylinder (10), insbesondere Nehmerzylinder für eine hydraulische Kupplungsbetätigung für Kraftfahrzeuge, mit einem Zylindergehäuse (18), in dem ein Druckraum (20) ausgebildet ist, der auf einer Seite variabel von einem längsverschieblich im Zylindergehäuse (18) aufgenommenen Kolben (14) einer Kolbenbaugruppe (12) begrenzt ist, die eine starr mit dem Kolben (14) verbundene Kolbenstange (16) aufweist, wobei der Kolben (14) eine Außenkontur (24) hat, die ein Verkippen der Kolbenbaugruppe (12) im Zylindergehäuse (18) gestattet, und einen druckraumseitigen Fortsatz (26) besitzt, auf dem vermittels eines Halterings (28) ein Dichtelement (30) zentriert gehalten ist, das mit einer umlaufenden Dichtlippe (32) gleitfähig und dichtend an einer innenumfangsseitigen Lauffläche (34) des Zylindergehäuses (18) anliegt, und wobei der Haltering (28) auf seiner vom Dichtelement (30) abgewandten Seite mit einer Verlängerung (44) versehen ist, die hinsichtlich ihrer Länge und/oder ihres Durchmessers angepasst ist, bei einem Verkippen der Kolbenbaugruppe (12) im Zylindergehäuse (18) dann an der Lauffläche (34) des Zylindergehäuses (18) zur Anlage zu gelangen, um die Kolbenbaugruppe (12) am Zylindergehäuse (18) abzustützen, wenn ein vorbestimmter Verkippwinkel der Kolbenbaugruppe (12) gegenüber einer Mittelachse (46) des Zylindergehäuses (18) erreicht ist, **dadurch gekennzeichnet, dass** die Verlängerung (44) des Halterings (28) ausgesteift ist und einen im Wesentlichen hohlzylindrischen Außenabschnitt (138) aufweist, der sich über eine Mehrzahl von gleichmäßig über dem Innenumfang des Außenabschnitts (138) verteilten Aussteifungselementen (140) in radialer Richtung auf dem Fortsatz (26) des Kolbens (14) abstützt.

2. Hydraulikzylinder (10) nach Anspruch 1, **dadurch gekennzeichnet, dass** die sich entlang des Außenabschnitts (138) erstreckenden Aussteifungselemente (140) hohlkammerprofilartig ausgebildet sind und jeweils einen im Wesentlichen trapezförmigen Querschnitt aufweisen, wobei sie mit ihrer Schmalseite (142) an dem Fortsatz (26) des Kolbens (14) anliegen.

3. Hydraulikzylinder (10) nach Anspruch 1 oder 2, dadurch ge kennzeichnet, dass der Haltering (28) mittels einer Schnappver bindung (148) am Fortsatz (26) des Kolbens (14) befestigt ist.

4. Hydraulikzylinder (10) nach Anspruch 3, **dadurch gekennzeichnet, dass** der Haltering (28) eine Mehrzahl von sich in axialer Richtung erstreckenden Federarmen (150) aufweist, die an ihren freien Enden radial innen jeweils mit einem nasenartigen Vorsprung (152) versehen sind, welcher mit einer am Außenumfang des Fortsatzes (26) ausgebildeten Radialnut (154) eingreift.

5. Hydraulikzylinder (10) nach Anspruch 4, **dadurch gekennzeichnet, dass** die Federarme (150) des Halterings (28) in Umfangsrichtung gesehen jeweils zwischen benachbarten Aussteifungselementen (140) des Halterings (28) angeordnet sind.

6. Hydraulikzylinder (10) nach einem der vorhergehenden Ansprüche, **dadurch gekennzeichnet, dass** der Haltering (28) auf seiner dem Kolben (14) zugewandten Seite mit einem ringförmigen Andruckvorsprung (156) versehen ist, der in eine ringförmige Axialnut (158) des Dichtelements (30) eingreift, die auf der vom Kolben (14) abgewandten Seite des Dichtelements (30) die Dichtlippe (32) von einem ringförmigen Befestigungsabschnitt (160) des Dichtelements (30) trennt, der auf dem Fortsatz (26) des Kolbens (14) sitzt.

7. Hydraulikzylinder (10) nach einem der vorhergehenden Ansprüche, **dadurch gekennzeichnet, dass** der Haltering (28) auf seiner dem Kolben (14) zugewandten Seite eine kreisringförmige, ebene Stirnfläche (164) aufweist, über die der Haltering (28) in axialer Richtung des Kolbens (14) an einer zugeordneten Ringschulter (166) abstützbar ist, die am Außenumfang des Fort satzes (26) ausgebildet ist.

8. Hydraulikzylinder (10) nach einem der vorhergehenden Ansprüche, **dadurch gekennzeichnet, dass** auf der vom Druckraum (20) abgewandten Seite des Kolbens (14) ein Federelement (36) angeordnet ist, welches sich einerseits an einem am Zylindergehäuse (18) befestigten Federteller (38) abstützt und anderer seits mit der Kolbenstange (16) wirkverbunden ist, um die Kolbenbaugruppe (12) in einer von einem Boden (22) des Zylinderge häuses (18) weggewandten Richtung vorzuspannen.

9. Hydraulikzylinder (10) nach Anspruch 8, **dadurch gekennzeichnet, dass** ein Fixierabschnitt (40) vorgesehen ist, der die Kolbenbaugruppe (12) vor einer ersten Betätigung des Hydraulikzylinders (10) in einer vorbestimmten Hubstellung bezüglich des Zylindergehäuses (18) fixiert und dazu ausgebildet ist, mit der ersten Betätigung des Hydraulikzylinders (10) die Kolbenbaugruppe (12) gegenüber dem Zylindergehäuse (18) freizugeben, wobei der Fixierabschnitt (40) am Federteller (38) vorgesehen ist und zur lösbaren Fixierung der Kolbenbaugruppe (12) bezüglich des Zylindergehäuses (18) mit einem Gegenabschnitt (42) an der Kolbenstange (16) zusammenwirkt.

10. Hydraulikzylinder (10) nach Anspruch 9, **dadurch gekennzeichnet, dass** der Federteller (38) durch ein Ringteil ausgebildet ist, mit einem Innenringabschnitt (84), durch den sich die Kolbenstange (16) hindurch erstreckt, einem Außenringabschnitt (86), über den der Federteller (38) am Zylindergehäuse (18) befestigt ist, einem Bodenabschnitt (88), der den Innenringabschnitt (84) und den Außenringabschnitt (86) verbindet, sowie einer zwischen den vorgenannten Abschnitten (84, 86, 88) begrenzten Ringaussparung (90) zur Aufnahme eines kolbennahen Endes (92) des Federelements (36).

11. Hydraulikzylinder (10) nach Anspruch 10, **dadurch gekennzeichnet, dass** der Innenringabschnitt (84) an seinem freien Ende innenumfangsseitig einen den Fixierabschnitt (40) des Federtellers (38) ausbildenden, geringfügig radial auffederbaren Ringwulst (134) aufweist, während die Kolbenstange (16) einen Kolbenstangenkopf (76) hat, der außenumfangsseitig mit einem den Gegenabschnitt (42) an der Kolbenstange (16) ausbildenden, im Querschnitt gesehen im Wesentlichen balligen Ringbund (136) versehen ist, der sich im fixierten Zustand der Ko benbaugruppe (12) an dem Ringwulst (134) axial abstützt.

12. Hydraulikzylinder (10) nach Anspruch 10 oder 11, **dadurch gekennzeichnet, dass** der Innenringabschnitt (84) des um die Mittelachse (46) drehwinkelorientiert am Zylindergehäuse (18) befestigten Federtellers (38) auf bezüglich der Mittelachse (46) des Zylindergehäuses (18) diametral gegenüberliegenden Seiten mit Aussparungen (132) versehen ist, die im freigegebenen Zustand der Kolbenbaugruppe (12) eine definierte Auslenkung der Kolbenstange (16) gegenüber der Mittelachse (46) des Zylindergehäuses (18) gestatten.

13. Hydraulikzylinder (10) nach einem der Ansprüche 10 bis 12, **dadurch gekennzeichnet, dass** der Federteller (38) auf der von der Ringaussparung (90) abgewandten Seite des Bodenabschnitts (88) einen ringförmigen Zentriervorsprung (122) aufweist, der eine konisch abgeschrägte Innenumfangsfläche (128) besitzt, gegen die eine komplementär geformte Gegenfläche (130) am Außenumfang des Kolbens (14) bei freigegebener Kolbenbaugruppe (12) in Anlage bringbar ist, um die Kolbenstange (16) mit der Mittelachse (46) des Zylindergehäuses (18) im Wesentlichen auszufluchten.

14. Hydraulikzylinder (10) nach einem der vorhergehenden Ansprüche, **dadurch gekennzeichnet, dass** der Kolben (14) aus Kunststoff auf die Kolbenstange (16) aufgespritzt ist, um den Kolben (14) mit der Kolbenstange (16) starr zu verbinden.

## Claims

1. Hydraulic cylinder (10), particularly slave cylinder for a hydraulic actuating system for motor vehicles, comprising a cylinder housing (18) in which is formed a pressure chamber (20) variably bounded on one side by a piston (14), which is received in the cylinder housing (18) to be longitudinally displaceable, of a piston subassembly (12) comprising a piston rod (16) rigidly connected with the piston (14), wherein the piston (14) has an outer contour (24) permitting tilting of the piston assembly (12) in the cylinder housing (18) and includes an extension (26) which is at the pressure chamber side and on which a sealing element (30) is retained and centered by a retaining ring (28), the sealing element slidably and sealably bearing by an encircling sealing lip (32) against a sliding surface (34), which is at the inner circumference, of the cylinder housing (18), and wherein the retaining ring (28) is provided on the side thereof remote from the sealing element (30) with a prolongation (44) adapted with respect to the length and/or diameter thereof to come into contact with the sliding surface (34) of the cylinder housing (18) so as to support the piston subassembly (12) at the cylinder housing (18) when, upon tilting of the piston subassembly (12) in the cylinder housing (18), a predetermined tilt angle of the piston subassembly (12) relative to a center axis (46) of the cylinder housing (18) is reached, **characterized in that** the prolongation (44) of the retaining ring (28) is stiffened and has a substantially hollow-cylindrical outer section (138) supported in radial direction on the extension (26) of the piston (14) by way of a plurality of stiffening elements (140) uniformly distributed over the inner circumference of the outer section (138).

2. Hydraulic cylinder (10) according to claim 1, **characterized in that** the stiffening elements (140) extending along the outer section (138) are constructed in the form of a hollow-chambered section member and each have a substantially trapezium-shaped cross-section, wherein they bear by the narrow side (142) thereof against the extension (26) of the piston (14) .

3. Hydraulic cylinder (10) according to claim 1 or 2, **characterized in that** the retaining ring (28) is secured to the extension (26) of the piston (14) by a snap connection (148).

4. Hydraulic cylinder (10) according to claim 3, **characterized in that** the retaining ring (28) has a plurality of spring arms (150) extending in axial direction and each provided at the free end thereof radially inwardly with a lug-like projection (152) in engagement with a radial groove (154) formed at the outer circumference of the extension (26).

5. Hydraulic cylinder (10) according to claim 4, **characterized in that** the spring arms (150) of the retaining ring (28) as seen in circumferential direction are respectively arranged between adjacent stiffening elements (140) of the retaining ring (28).

6. Hydraulic cylinder (10) according to any one of the preceding claims, **characterized in that** the retaining ring (28) is provided at the side thereof facing the piston (14) with an annular pressing projection (156) engaged in an annular axial groove (158) of the sealing element (30), which groove at the side of the sealing element (30) remote from the piston (14) separates the sealing lip (32) from an annular fastening section (160) of the sealing element (30), the fastening section being seated on the extension (26) of the piston (14).

7. Hydraulic cylinder (10) according to any one of the preceding claims, **characterized in that** the retaining ring (28) has on the side thereof facing the piston (14) a circularly annular planar end surface (164) by way of which the retaining ring (28) can be supported in axial direction of the piston (14) on an associated annular shoulder (166) formed at the outer circumference of the extension (26).

8. Hydraulic cylinder (10) according to any one of the preceding claims, **characterized in that** a spring element (36) is arranged at the side of the piston (14) remote from the pressure chamber (20), the spring element being supported at one end on a spring plate (38) fastened to the cylinder housing (18) and operatively connected at the other end with the piston rod (16) so as to bias the piston subassembly (12) in a direction away from a base (22) of the cylinder housing (18).

9. Hydraulic cylinder (10) according to claim 8, **characterized in that** a fixing section (40) is provided, which fixes the piston subassembly (12) in a predetermined stroke setting with respect to the cylinder housing (18) prior to first actuation of the hydraulic cylinder (10) and which is constructed to release the piston subassembly (12) relative to the cylinder housing (18) when first actuation of the hydraulic cylinder (10) takes place, wherein the fixing section (40) is provided at the spring plate (38) and co-operates with a mating section (42) at the piston rod (16) for releasable fixing of the piston subassembly (12) with respect to the cylinder housing (18).

10. Hydraulic cylinder (10) according to claim 9, **characterized in that** the spring plate (38) is formed by an annular member with an inner annular section (84) through which the piston rod (16) extends, an outer annular section (86) by way of which the spring plate (38) is secured to the cylinder housing (18), a base section (88) connecting the inner annular section (84) and the outer annular section (86), and an annular recess (90) bounded between the aforesaid sections (84, 86, 88) for receiving a piston-adjacent end (92) of the spring element (36) .

11. Hydraulic cylinder (10) according to claim 10, **characterized in that** the inner annular section (84) has at the free end thereof at the inner circumference an annular bead (134) which forms the fixing section (40) of the spring plate (38) and is capable of slight radial spring-back, whereas the piston rod (16) has a piston rod head (76) provided at the outer circumference with a substantially crowned annular collar (136) as seen in cross-section, which forms the mating section (42) at the piston rod (16) and which in the fixed state of the piston subassembly (12) is axially supported on the annular bead (134).

12. Hydraulic cylinder (10) according to claim 10 or 11, **characterized in that** the inner annular section (84) of the spring plate (38), which is secured to the cylinder housing (18) and oriented in rotational angle about the center axis (46), is provided with cut-outs (132) at sides which are diametrically opposite with respect to the center axis (46) of the cylinder housing (18), which cut-outs in the released state of the piston subassembly (12) permit defined deflection of the piston rod (16) relative to the center axis (46) of the cylinder housing (18).

13. Hydraulic cylinder (10) according to any one of claims 10 to 12, **characterized in that** the spring plate (38) has at the side of the base section (88) remote from the annular recess (90) an annular centering projection (122) having a conically chamfered inner circumferential surface (128) with which a mating surface (130) of complementary form at the outer circumference of the piston (14) can be brought into contact, when the piston subassembly (12) is released, so as to substantially align the piston rod (16) with the center axis (46) of the cylinder housing (18).

14. Hydraulic cylinder (10) according to any one of the preceding claims, **characterized in that** the piston (14) is injection-molded from plastics material on the piston rod (16) so as to rigidly connect the piston (14) with the piston rod (16) .

## Revendications

1. Vérin hydraulique (10), en particulier cylindre récepteur pour un actionnement d'embrayage hydraulique de véhicules automobiles, comprenant un carter de cylindre (18), dans lequel est formée une chambre de pression (20) qui est délimitée sur un côté de manière variable par un piston (14) d'un ensemble piston (12), lequel piston est logé dans le carter de cylindre (18) de manière à pouvoir coulisser longitudinalement, lequel ensemble présente une tige de piston (16) reliée rigidement au piston (14), dans lequel le piston (14) présente un contour extérieur (24) qui permet un basculement de l'ensemble piston (12) dans le carter de cylindre (18), et possède une partie saillante (26) côté chambre de pression, sur laquelle un élément d'étanchéité (30) est retenu de manière centrée au moyen d'une bague de retenue (28), lequel élément d'étanchéité s'applique par une lèvre d'étanchéité (32) périphérique de manière coulissante et étanche contre une surface de contact (34) côté périphérie intérieure du carter de cylindre (18), et dans lequel la bague de retenue (28) est pourvue sur sa face opposée à l'élément d'étanchéité (30) d'un prolongement (44), qui est adapté du point de vue de sa longueur et/ou de son diamètre pour venir alors en appui sur la surface de contact (34) du carter de cylindre (18) lors d'un basculement de l'ensemble piston (12) dans le carter de cylindre (18), afin de soutenir l'ensemble piston (12) sur le carter de cylindre (18), lorsqu'un angle de basculement prédéfini de l'ensemble piston (12) par rapport à un axe central (46) du carter de cylindre (18) est atteint, **caractérisé en ce que** le prolongement (44) de la bague de retenue (28) est renforcé et présente une section extérieure (138) sensiblement cylindrique creuse, qui s'appuie sur une pluralité d'éléments de renforcement (140), répartis uniformément sur la périphérie intérieure de la section extérieure (138), dans la direction radiale sur la partie saillante (26) du piston (14).

2. Vérin hydraulique (10) selon la revendication 1, **caractérisé en ce que** les éléments de renforcement (140) s'étendant le long de la section extérieure (138) sont du type profilé creux et présentent chacun une section transversale sensiblement trapézoïdale, dans lequel lesdits éléments s'appliquent par leur petit côté (142) contre la partie saillante (26) du piston (14).

3. Vérin hydraulique (10) selon la revendication 1 ou 2, **caractérisé en ce que** la bague de retenue (28) est fixée au moyen d'un système de liaison par encliquetage (148) à la partie saillante (26) du piston (14).

4. Vérin hydraulique (10) selon la revendication 3, **caractérisé en ce que** la bague de retenue (28) comprend une pluralité de bras élastiques (150) s'étendant dans la direction axiale, qui sont pourvus chacun radialement à l'intérieur, à leurs extrémités libres, d'une saillie (152) du type ergot, laquelle s'insère par une rainure radiale (154) ménagée sur la périphérie extérieure de la partie saillante (26).

5. Vérin hydraulique (10) selon la revendication 4, **caractérisé en ce que** les bras élastiques (150) de la bague de retenue (28) sont agencés, vus dans la direction périphérique, respectivement entre des éléments de renforcement (140) voisins de la bague de retenue (28).

6. Vérin hydraulique (10) selon l'une quelconque des revendications précédentes, **caractérisé en ce que** la bague de retenue (28) est pourvue sur sa face tournée vers le piston (14) d'une saillie de pression annulaire (156), qui s'insère dans une rainure axiale annulaire (158) de l'élément d'étanchéité (30), laquelle rainure, sur la face de l'élément d'étanchéité (30) opposée au piston (14), sépare la lèvre d'étanchéité (32) d'une section de fixation annulaire (160) de l'élément d'étanchéité (30), laquelle repose sur la partie saillante (26) du piston (14).

7. Vérin hydraulique (10) selon l'une quelconque des revendications précédentes, **caractérisé en ce que** la bague de retenue (28) présente sur sa face tournée vers le piston (14) une surface frontale (164) plate en forme d'anneau circulaire, par l'intermédiaire de laquelle la bague de retenue (28) peut être en appui sur un épaulement annulaire (166) associé dans la direction axiale du piston (14), lequel épaulement est formé sur la périphérie extérieure de la partie saillante (26) .

8. Vérin hydraulique (10) selon l'une quelconque des revendications précédentes, **caractérisé en ce qu'**un élément ressort (36), lequel s'appuie d'une part sur une cuvette de ressort (38) fixée au carter de cylindre (18) et est d'autre part en liaison fonctionnelle avec la tige de piston (16), est agencé sur la face du piston (14) opposée à la chambre de pression (20), afin de pré-contraindre l'ensemble piston (12) dans une direction détournée d'un fond (22) du carter de cylindre (18).

9. Vérin hydraulique (10) selon la revendication 8, **caractérisé en ce qu'**une section de fixation (40) est prévue, qui fixe l'ensemble piston (12) avant un premier actionnement du vérin hydraulique (10) dans une position de levage prédéfinie par rapport au carter de cylindre (18) et qui est conçue pour libérer l'ensemble piston (12) par rapport au carter de cylindre (18) au premier actionnement du vérin hydraulique (10), dans lequel la section de fixation (40) est prévue sur la cuvette de ressort (38) et coopère avec une section complémentaire (42) sur la tige de piston (16) pour fixer de manière détachable l'ensemble piston (12) par rapport au carter de cylindre (18).

10. Vérin hydraulique (10) selon la revendication 9, **caractérisé en ce que** la cuvette de ressort (38) est formée par une partie annulaire, comprenant une section annulaire intérieure (84) à travers laquelle s'étend la tige de piston (16), une section annulaire extérieure (86), par l'intermédiaire de laquelle la cuvette de ressort (38) est fixée au carter de cylindre (18), une section de fond (88), qui relie la section annulaire intérieure (84) et la section annulaire extérieure (86), ainsi qu'un évidement annulaire (90) délimité entre les sections (84, 86, 88) précitées, destiné à loger une extrémité (92), proche du piston, de l'élément ressort (36).

11. Vérin hydraulique (10) selon la revendication 10, **caractérisé en ce que** la section annulaire intérieure (84) présente à son extrémité libre côté périphérie intérieure un bourrelet annulaire (134) se détendant légèrement radialement et formant la section de fixation (40) de la cuvette de ressort (38), tandis que la tige de piston (16) présente une tête de tige de piston (76), qui est pourvue côté périphérie extérieure d'une collerette annulaire (136) sensiblement bombée vue en coupe transversale, formant la section complémentaire (42) sur la tige de piston (16), laquelle collerette s'appuie axialement sur le bourrelet annulaire (134) lorsque l'ensemble piston (12) se trouve dans l'état fixé.

12. Vérin hydraulique (10) selon la revendication 10 ou 11, **caractérisé en ce que** la section annulaire intérieure (84) de la cuvette de ressort (38) fixée au carter de cylindre (18) de manière à être orientée selon un angle de rotation autour de l'axe central (46) est pourvue sur des faces diamétralement opposées par rapport à l'axe central (46) du carter de cylindre (18) d'évidements (132), qui permettent, une fois l'ensemble piston (12) libéré, une déviation définie de la tige de piston (16) par rapport à l'axe central (46) du carter de cylindre (18).

13. Vérin hydraulique (10) selon l'une quelconque des revendications 10 à 12, **caractérisé en ce que** la cuvette de ressort (38) présente sur la face de la section de fond (88), laquelle face est opposée à l'évidement annulaire (90), une saillie de centrage annulaire (122), qui possède une section annulaire intérieure (128) chanfreinée de manière conique, contre laquelle une surface antagoniste (130) formée de manière complémentaire peut être amenée en appui sur la périphérie extérieure du piston (14) lorsque l'ensemble piston (12) est libéré, afin d'aligner sensiblement la tige de piston (16) avec l'axe central (46) du carter de cylindre (18).

14. Vérin hydraulique (10) selon l'une quelconque des revendications précédentes, **caractérisé en ce que** le piston (14) est injecté sur la tige de piston (16) à partir d'une matière plastique, afin de relier rigidement le piston (14) à la tige de piston (16).
